# EUROPEAN PATENT APPLICATION

(11) **EP 4 421 913 A1**
(43) Date of publication of application: **28.08.2024**
(21) Application number: 22891547.6
(22) Date of filing: 11.08.2022
(51) Int. Cl.: H01M 4/525

(54) **PREPARATION METHOD FOR HIGH-NICKEL TERNARY POSITIVE ELECTRODE MATERIAL**

(30) Priority: 09.11.2021 CN 202111317910
(71) Applicant: Guangdong Brunp Recycling Technology Co., Ltd, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: LIN, Bo, Foshan, Guangdong 528137 (CN); LI, Changdong, Foshan, Guangdong 528137 (CN); RUAN, Dingshan, Foshan, Guangdong 528137 (CN); CAI, Yong, Foshan, Guangdong 528137 (CN); LIU, Weijian, Foshan, Guangdong 528137 (CN); XU, Shuaijun, Foshan, Guangdong 528137 (CN)
(74) Representative: Primiceri, Maria Vittoria
(86) International application number: PCT/CN2022/111811
(87) International publication number: WO 2023/082739

(57) **Abstract**

Disclosed is a preparation method for a high-nickel ternary positive electrode material, comprising: mixing LiOH powder and a high-nickel ternary precursor at a molar ratio (0.6-0.95): 1, performing first sintering in an oxygen atmosphere, adding a metal oxide into the LiOH solution to obtain a mixed solution, mixing the mixed solution with a primary sintering material in a protective atmosphere, drying and crushing the mixed material, performing second sintering of the powder material, spraying an atomized boric acid alcohol solution onto the secondary sintered material, and performing tempering treatment, to obtain a high-nickel ternary positive electrode material. The primary particle size of the material of the present invention is relatively uniform, and the primary particle surface forms a plasma conductor coating layer such as Li₂MoO₄, Li₂WO₄ or Li₂SnO₃, which can protect the material, and a secondary spherical surface of the material also has an ion conductor Li₃BO₃ coating layer, which also protects the material. That is, a primary particle and a secondary sphere of the present material both have coating layers, which greatly enhances electrical conductivity of the material and improves the capacity, circulation, and rate performance of the material.

## Description

### TECHNICAL FIELD

The present invention belongs to the technical field of lithium ion batteries, and particularly relates to a preparation method for a high-nickel ternary cathode material.

### BACKGROUND

High nickel ternary cathode materials mainly refer to NCM ternary materials with Ni content greater than 60%. With the increase of the Ni content, a specific capacity of the NCM ternary materials will also increase. High-nickel ternary material is one of the future development orientations of the cathode materials. Although the high-nickel ternary material has a high specific capacity, the high-nickel ternary material still has some shortcomings, while being used, such as microcracks easily caused by volume changes in a cycle process, difficulty in mass transfer caused by large pores between primary particles, material degradation caused by invasion of electrolytic solution, and the like. All these shortcomings will lead to poor cycle performance of the high-nickel ternary material.

At present, a method for solid-phase mixing and high-temperature sintering is generally adopted for substrate sintering and coating modification of commercial high-nickel ternary materials. Although this method is simple and feasible, the method still has the following defects: (1) for the substrate sintering, it is difficult to ensure that a precursor and a lithium source are thoroughly mixed, resulting in uneven growth of the primary particles; and (2) for the coating modification, it is difficult to ensure the uniformity of the coating layer, and it is easy to cause partial over-thick coating or no coating, and the coating layer basically only exists on surfaces of secondary ball materials.

### SUMMARY

The present invention aims at solving at least one of the above-mentioned technical problems in the existing technology. Therefore, the present invention provides a preparation method for a high-nickel ternary cathode material.

According to one aspect of the present invention, a preparation method for a high-nickel ternary cathode material is provided, including the following steps of:
mixing a LiOH powder with a high-nickel ternary precursor according to a molar ratio of (0.6 to 0.95): 1, and performing primary sintering in an oxygen atmosphere to obtain a primary-sintered material, wherein the high-nickel ternary precursor has a morphology of a secondary ball composed of primary particles;
adding a metal oxide into a LiOH solution to obtain a mixed solution, wherein the metal oxide is at least one of oxides of Mo, W or Sn; and the mixed solution is a mixed solution of Li₂MoO₄, Li₂WO₄ or Li₂SnO₃ with LiOH;
mixing the mixed solution with the primary-sintered material in a protective atmosphere to obtain a mixed material, drying and crushing the mixed material to obtain a power material, and performing secondary sintering on the powder material to obtain a secondary-sintered material; and
spraying an atomized boric acid alcohol solution onto the secondary-sintered material, and then tempering to obtain the high-nickel ternary cathode material.

In some embodiments of the present invention, the primary sintering is performed at a temperature of 500 °C to 650 °C; and the primary sintering lasts for 2 hours to 8 hours.

In some embodiments of the present invention, a concentration of Li in the mixed solution ranges from 10 g/L to 37 g/L.

In some embodiments of the present invention, a liquid-solid ratio of the mixed solution to the primary-sintered material is 0.25 mL/g to 1 mL/g.

In some embodiments of the present invention, the stirring lasts for 3 minutes to 120 minutes.

In some embodiments of the present invention, the drying is performed by means of vacuum drying.

In some embodiments of the present invention, the mixing is performed by means of mechanical stirring, ultrasonic vibration or a combination of the two.

In some embodiments of the present invention, the secondary sintering is performed at a temperature of 700 °C to 1,000 °C; the secondary sintering lasts for 8 hours to 24 hours; and the secondary sintering is performed in an oxygen atmosphere.

In some embodiments of the present invention, the protective atmosphere is nitrogen, oxygen, argon or compressed air with CO₂ removed.

In some embodiments of the present invention, the secondary-sintered material is a cathode material with a primary particle coated with an ionic conductor, the ionic conductor is at least one of Li₂MoO₄, Li₂WO₄ or Li₂SnO₃, and a coating amount of the ionic conductor is 0.05wt% to 0.8wt% of the secondary-sintered material in terms of a total amount of Mo, W and Sn in the ionic conductor.

In some embodiments of the present invention, a preparation process of the boric acid alcohol solution includes: adding a boric acid into an alcohol solution to obtain a mixture and heating the mixture in water bath to obtain the boric acid alcohol solution, wherein the heating in the water bath is performed at a temperature of 50 °C to 70 °C. Preferably, the alcohol solution is absolute ethyl alcohol.

In some embodiments of the present invention, a concentration of B in the boric acid alcohol solution ranges from 15 g/L to 25 g/L.

In some embodiments of the present invention, a content of boron in the high-nickel ternary cathode material ranges from 0.02wt% to 0.5wt%.

In some embodiments of the present invention, the tempering is performed in an oxygen atmosphere; the tempering is performed at a temperature of 200 °C to 350 °C; and the tempering lasts for 4 hours to 12 hours.

According to a preferred embodiment of the present invention, the present invention has at least the following beneficial effects.
1. The primary sintering of the present invention is performed at lithium deficiency and lower temperature, and the primary particles are initially formed but grow incompletely, thus forming a porous primary-sintered material with incomplete growth of primary particles, which provides good conditions for subsequent liquid-phase secondary lithium supplementation and coating the primary particle.
2. According to the present invention, the primary-sintered material is placed in the LiOH solution containing one or more components of Li₂MoO₄, Li₂WO₄ or Li₂SnO₃ for liquid-phase lithium supplementation and coating the primary particle, and water is evaporated. On one hand, the residual lithium unevenly distributed on the surface of the primary-sintered material can be dissolved to enter the solution; on the other hand, LiOH, Li₂MoO₄, Li₂WO₄ or Li₂SnO₃, and the like, will enter the pores of the primary-sintered material and be deposited in the evaporating process, so as to realize uniform lithium supplementation and coat one or more of the ionic conductors Li₂MoO₄, Li₂WO₄ or Li₂SnO₃ on the surfaces of the primary particles.
3. In the present invention, the secondary-sintered material is coated with boric acid through spraying and then tempered. H₃BO₃ will be decomposed into B₂O₃, while B₂O₃ is an acidic oxide which will react with LiOH and Li₂CO₃ to generate Li₃BO₃. The excess lithium source is due to the fact that a molar ratio Li/Me of a sum of lithium sources added by primary lithium blending and secondary lithium supplementation to transition metal elements is greater than 1, and the high-nickel ternary cathode material itself also has residual lithium on the surface thereof, so that the residual lithium on the surface can react with H₃BO₃ to obtain a finished product with the ionic conductor Li₃BO₃ coated on the surface of the secondary ball, thus obtaining a finished product with coating on both the surface of the primary particle and the surface of the secondary ball.
4. The size of the primary particles of the high-nickel ternary cathode material prepared according to the present invention is relatively uniform, and the primary particles are tightly combined with each other. An ionic conductor coating layer of Li₂MoO₄, Li₂WO₄ or Li₂SnO₃ etc. is formed on the surfaces of the primary particles, which can protect the material. Moreover, even if the material forms microcracks or cracks along gaps between the primary particles in the cycle process, the coating layer on the surfaces of the primary particles can continue to protect the material, thereby improving the cycle performance of the material. Meanwhile, an ionic conductor coating layer of Li₃BO₃ is also formed on the surfaces of the secondary balls of the material, which also protects the material. That is, both the primary particles and the secondary balls of the material have coating layers and the coatings are all ionic conductors, which can greatly enhance an electrical conductivity of the material, thus improving capacity, cycle and rate performances of the material.

### BRIEF DESCRIPTION OF DRAWINGS

The present invention will be further explained with reference to the accompanying drawings and examples hereinafter, wherein:
FIG. 1 is an SEM graph of a primary-sintered material in Example 1 of the present invention;
FIG. 2 is an SEM graph of a secondary-sintered material in Example 1 of the present invention.
FIG. 3 is an SEM graph of a finished product of a high-nickel ternary cathode material in Example 1 of the present invention.
FIG. 4 is a 0.5 C cycle comparison diagram of materials according to different schemes of the present invention; and
FIG. 5 is a rate performance comparison diagram of materials according to different schemes of the present invention.

### DETAILED DESCRIPTION

The concepts and the produced technical effects of the present invention will be clearly and completely described in conjunction with the Examples, so as to sufficiently understand the objects, the features and the effects of the present invention. Obviously, the described Examples are merely some Examples of the present invention, rather than all the Examples. Based on Examples of the present invention, other Examples obtained by those skilled in the art without going through any creative effort shall all fall within the protection scope of the present invention.

### Example 1

In this Example, a high-nickel ternary cathode material was prepared, and the specific process was as follows:
(1) evenly mixing LiOH with a high-nickel ternary precursor Ni_{0.8}Co_{0.1}Mn_{0.1}(OH)₂ according to a molar ratio that Li: Me = 0.8;
(2) placing the mixture above in an oxygen atmosphere, and performing primary sintering at 500 °C for 6 hours to obtain a porous primary-sintered material with incompletely grew primary particles;
(3) dissolving a certain amount of LiOH into pure water to prepare a LiOH solution, then adding a certain amount of SnO₂, and fully stirring to prepare a mixed solution A, wherein a concentration of Li in the mixed solution A was 32 g/L and a concentration of Sn in the mixed solution A was 7.62 g/L;
(4) placing the primary-sintered material in a closed container filled with nitrogen;
(5) pouring the mixed solution A into the primary-sintered material according to a liquid-solid ratio of 0.5 mL/g, and performing ultrasonic vibration for 60 minutes to obtain a mixed material B;
(6) placing the mixed material B in a vacuum drying oven at 70 °C and evaporating the same to dryness;
(7) crushing and sieving the above material evaporated to dryness to obtain a powder material C;
(8) performing secondary sintering on the powder material C in a sintering atmosphere of oxygen at a sintering temperature of 800 °C for 16 hours, so as to obtain a secondary-sintered material with primary particles coated with Li₂SnO₃, wherein a coating amount of Li₂SnO₃ was calculated as 0.38wt% of the secondary-sintered material in terms of Sn;
(9) adding a certain amount of boric acid into absolute ethyl alcohol, heating in a water bath at 70 °C to completely dissolve the boric acid to prepare a boric acid ethanol solution, wherein a content of B in the solution was 20 g/L;
(10) mixing the secondary-sintered material in a high-efficiency mixer for mixing, and then uniformly spraying the boric acid ethanol solution on the secondary-sintered material through an atomizer, wherein a liquid-solid ratio of the boric acid ethanol solution to the secondary-sintered material was 0.05 mL/g, and the spraying lasted for 20 minutes; and
(11) tempering the spray-coated secondary-sintered material in an atmosphere of oxygen at a tempering temperature of 250 °C for 10 hours to obtain a finished product of the high-nickel ternary cathode material, wherein a coating amount of Li₃BO₃ in the finished product was calculated as 0.1wt% of the high-nickel ternary cathode material in terms of B.

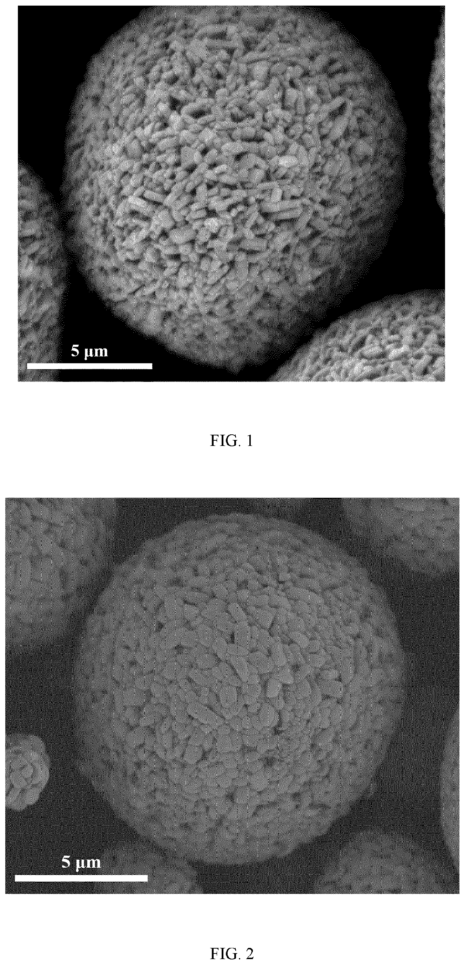

FIG. 1 is an SEM graph of the primary-sintered material of this Example. It can be clearly seen from the figure that the primary particles of the primary-sintered material are not full, there are large pores between the primary particles, and the surfaces of the whole secondary ball particles are uneven.

FIG. 2 is an SEM graph of the secondary-sintered material of this Example. It can be seen from the figure that after the liquid-phase secondary lithium supplementation and sintering, the primary particles of the secondary-sintered material obtained grow up obviously, the pores between the primary particles are obviously reduced, and the surface smoothness of the whole secondary ball particles is greatly improved.

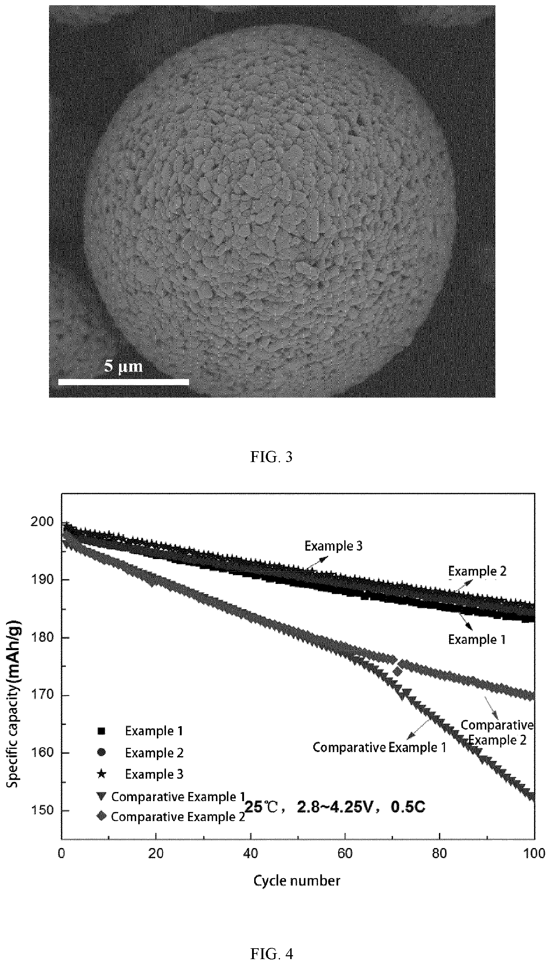

FIG. 3 is an SEM graph of the finished product of the high-nickel ternary cathode material in this Example. It can be seen from the figure that the primary particles of the finished product coated by H₃BO₃ and sintered are tightly combined, and the surfaces of the whole secondary ball particles are relatively smooth.

### Example 2

In this Example, a high-nickel ternary cathode material was prepared, and the specific process was as follows:
(1) evenly mixing LiOH with a high-nickel ternary precursor Ni_{0.8}Co_{0.1}Mn_{0.1}(OH)₂ according to a molar ratio that Li: Me = 0.9;
(2) placing the mixture above in an oxygen atmosphere, and performing primary sintering at 550 °C for 4 hours to obtain a porous primary-sintered material with incompletely grew primary particles;
(3) dissolving a certain amount of LiOH into pure water to prepare a LiOH solution, then adding a certain amount of MoOs, and fully stirring to prepare a mixed solution A, wherein a concentration of Li in the mixed solution A was 30 g/L and a concentration of Mo in the mixed solution A was 15 g/L;
(4) placing the primary-sintered material in a closed container filled with nitrogen;
(5) pouring the mixed solution A into the primary-sintered material according to a liquid-solid ratio of 0.3 mL/g, and stirring for 30 minutes by a mechanical stirring method to obtain a mixed material B;
(6) placing the mixed material B in a vacuum drying oven at 90 °C and evaporating the same to dryness;
(7) crushing and sieving the above material evaporated to dryness to obtain a powder material C;
(8) performing secondary sintering on the powder material C in a sintering atmosphere of oxygen at a sintering temperature of 830 °C for 14 hours, so as to obtain a secondary-sintered material with primary particles coated with Li₂MoO₃, wherein a coating amount of Li₂MoO₃ was calculated as 0.45wt% of the secondary-sintered material in terms of Mo;
(9) adding a certain amount of boric acid into absolute ethyl alcohol, heating in a water bath at 70 °C to completely dissolve the boric acid to prepare a boric acid ethanol solution, wherein a content of B in the solution was 20 g/L;
(10) mixing the secondary-sintered material in a high-efficiency mixer for mixing, and then uniformly spraying the boric acid ethanol solution on the secondary-sintered material through an atomizer, wherein a liquid-solid ratio of the boric acid ethanol solution to the secondary-sintered material was 0.04 mL/g, and the spraying lasted for 15 minutes; and
(11) tempering the spray-coated secondary-sintered material in an atmosphere of oxygen at a tempering temperature of 275 °C for 8 hours to obtain a finished product of the high-nickel ternary cathode material, wherein a coating amount of Li₃BO₃ in the finished product was calculated as 0.1wt% of the high-nickel ternary cathode material in terms of B.

### Example 3

In this Example, a high-nickel ternary cathode material was prepared, and the specific process was as follows:
(1) evenly mixing LiOH with a high-nickel ternary precursor Ni_{0.8}Co_{0.1}Mn_{0.1}(OH)₂ according to a molar ratio that Li: Me = 0.95;
(2) placing the mixture above in an oxygen atmosphere, and performing primary sintering at 600 °C for 3 hours to obtain a porous primary-sintered material with incompletely grew primary particles;
(3) dissolving a certain amount of LiOH into pure water to prepare a LiOH solution, then adding a certain amount of WO₃, and fully stirring to prepare a mixed solution A, wherein a concentration of Li in the mixed solution A was 21 g/L and a concentration of W in the mixed solution A was 6.31 g/L;
(4) placing the primary-sintered material in a closed container filled with nitrogen;
(5) pouring the mixed solution A into the primary-sintered material according to a liquid-solid ratio of 0.6 mL/g, and stirring for 10 minutes by means of mechanical stirring and ultrasonic vibration to obtain a mixed material B;
(6) placing the mixed material B in a vacuum drying oven at 110 °C and evaporating the same to dryness;
(7) crushing and sieving the above material evaporated to dryness to obtain a powder material C;
(8) performing secondary sintering on the powder material C in a sintering atmosphere of oxygen at a sintering temperature of 850 °C for 12 hours, so as to obtain a secondary-sintered material with primary particles coated with Li₂WO₃, wherein a coating amount of Li₂WO₃ was calculated as 0.38wt% of the secondary-sintered material in terms of W;
(9) adding a certain amount of boric acid into absolute ethyl alcohol, heating in a water bath at 70 °C to completely dissolve the boric acid to prepare a boric acid ethanol solution, wherein a content of B in the solution was 20 g/L;
(10) mixing the secondary-sintered material in a high-efficiency mixer for mixing, and then uniformly spraying the boric acid ethanol solution on the secondary-sintered material through an atomizer, wherein a liquid-solid ratio of the boric acid ethanol solution to the secondary-sintered material was 0.05 mL/g, and the spraying lasted for 30 minutes; and
(11) tempering the spray-coated secondary-sintered material in an atmosphere of oxygen at a tempering temperature of 325 °C for 6 hours to obtain a finished product of the high-nickel ternary cathode material, wherein a coating amount of Li₃BO₃ in the finished product was calculated as 0.1wt% of the high-nickel ternary cathode material in terms of B.

### Comparative Example 1

In this comparative example, a high-nickel ternary cathode material was prepared, and the specific process was as follows:
evenly mixing LiOH with a high-nickel ternary precursor Ni_{0.8}Co_{0.1}Mn_{0.1}(OH)₂ according to a molar ratio that Li: Me = 1.03, then keeping the temperature at 550 °C for 6 hours in an oxygen atmosphere, and then heating to 810 °C and keeping the temperature for 16 hours, thus obtaining an uncoated high-nickel ternary cathode material LiNi_{0.8}Co_{0.1}Mn_{0.1}O₂.

### Comparative Example 2

In this Example, a high-nickel ternary cathode material was prepared, and the specific process was as follows:
evenly mixing LiOH with a high-nickel ternary precursor Ni_{0.8}Co_{0.1}Mn_{0.1}(OH)₂ according to a molar ratio that Li: Me = 1.03, then keeping the temperature at 550 °C for 6 hours in an oxygen atmosphere, and then heating to 810 °C and keeping the temperature for 16 hours, thus obtaining a high-nickel ternary cathode material LiNi_{0.8}Co_{0.1}Mn_{0.1}O₂; and then, fully and evenly mixing LiNi_{0.8}Co_{0.1}Mn_{0.1}O₂ with H₃BO₃ according to a coating amount of B as 0.1wt%, and then keeping the temperature at 325 °C for 6 hours in an oxygen atmosphere, thus obtaining the high-nickel ternary cathode material LiNi_{0.8}Co_{0.1}Mn_{0.1}O₂ with surfaces of secondary balls coated by H₃BO₃.

### Experiment

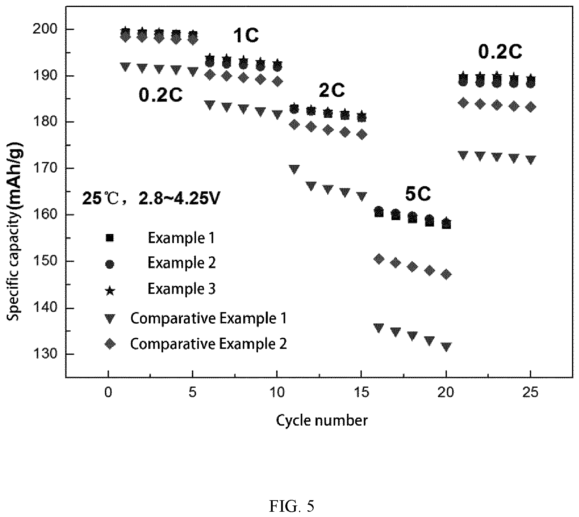

Examples 1 to 3 and Comparative Examples 1 to 2 were made into coin cells, and the first-cycle specific capacities, initial efficiencies and retention rates after 100 cycles were tested at 25 °C. The test conditions were: 2.8 V to 4.25 V, charging and discharging at 0.5 C, and tests were conducted on a LAND battery testing system. The test results were shown in Table 1 and Figs. 4 and 5.

**Table 1 Comparison of electrochemical performance of different schemes**

| Electrochemical performance | Example 1 | Example 2 | Example 3 | Comparative Example 1 | Comparative Example 2 |
|---|---|---|---|---|---|
| First charging and discharging specific capacity (mAh/g) | 203.6 | 202.9 | 204.4 | 196.5 | 202.8 |
| First charging and discharging efficiency (%) | 89.5 | 89.4 | 89.4 | 89.2 | 89.3 |
| Discharging capacity retention rate after 100 cycles at 0.5 C (%) | 92.4 | 92.8 | 93.1 | 77.5 | 85.9 |

It can be seen from Table 1 and Figs. 4 and 5 that the electrochemical performances of the high-nickel ternary cathode materials prepared in Examples with double coating of primary particles and secondary balls are obviously better than those of Comparative Examples 1 and 2.

The Examples of the present invention are described in detail with reference to the drawings above, but the present invention is not limited to the above Examples, and various changes may also be made within the knowledge scope of those of ordinary skills in the art without departing from the purpose of the present invention. In addition, in case of no conflict, the Examples in the present invention and the features in the Examples may be combined with each other.

## Claims

1. A preparation method for a high-nickel ternary cathode material, comprising the following steps of:
mixing a LiOH powder with a high-nickel ternary precursor according to a molar ratio of (0.6 to 0.95): 1, and performing primary sintering in an oxygen atmosphere to obtain a primary-sintered material;
adding a metal oxide into a LiOH solution to obtain a mixed solution, wherein the metal oxide is at least one of oxides of Mo, W or Sn;
mixing the mixed solution with the primary-sintered material in a protective atmosphere to obtain a mixed material, drying and crushing the mixed material to obtain a power material, and performing secondary sintering on the powder material to obtain a secondary-sintered material; and
spraying an atomized boric acid alcohol solution onto the secondary-sintered material, and then tempering to obtain the high-nickel ternary cathode material.

2. The preparation method according to claim 1, wherein the primary sintering is performed at a temperature of 500 °C to 650 °C.

3. The preparation method according to claim 1, wherein a concentration of Li in the mixed solution ranges from 10 g/L to 37 g/L; and a liquid-solid ratio of the mixed solution to the primary-sintered material is 0.25 mL/g to 1 mL/g.

4. The preparation method according to claim 1, wherein the secondary sintering is performed at a temperature of 700 °C to 1,000 °C; and the secondary sintering is performed in an oxygen atmosphere.

5. The preparation method according to claim 1, wherein the protective atmosphere is nitrogen, oxygen, argon or compressed air with CO₂ removed.

6. The preparation method according to claim 1, wherein the secondary-sintered material is a cathode material with a primary particle coated with an ionic conductor, the ionic conductor is at least one of Li₂MoO₄, Li₂WO₄ or Li₂SnO₃, and a coating amount of the ionic conductor is 0.05wt% to 0.8wt% of the secondary-sintered material in terms of a total amount of Mo, W and Sn in the ionic conductor.

7. The preparation method according to claim 1, wherein a preparation process of the boric acid alcohol solution comprises: adding a boric acid into an alcohol solution to obtain a mixture and heating the mixture in water bath to obtain the boric acid alcohol solution; and the heating in water bath is performed at a temperature of 50 °C to 70 °C.

8. The preparation method according to claim 1, wherein a concentration of B in the boric acid alcohol solution ranges from 15 g/L to 25 g/L.

9. The preparation method according to claim 1, wherein a content of boron in the high-nickel ternary cathode material ranges from 0.02wt% to 0.5wt%.

10. The preparation method according to claim 1, wherein the tempering is performed in an oxygen atmosphere; and the tempering is performed at a temperature of 200 °C to 350 °C.
